# EUROPÄISCHE PATENTSCHRIFT

(11) **EP 1 747 974 B1**
(45) Veröffentlichungstag und Bekanntmachung des Hinweises auf die Patenterteilung: **24.12.2008**
(21) Anmeldenummer: 06012455.9
(22) Anmeldetag: 17.06.2006
(51) Int. Cl.: B60R 19/24, B62D 25/16

(54) **Halter, vorzugsweise zur Befestigung eines Fahrzeugverkleidungsteils an einer Fahrzeugkarosse**
Holder, preferably for the fixation of a outer trim part to the vehicle body
Element de maintien pour la fixation d'une pièce de revêtement sur la structure du véhicule

(30) Priorität: 28.07.2005 DE 102005035359
(43) Veröffentlichungstag der Anmeldung: 31.01.2007
(73) Patentinhaber: REHAU AG + Co, 95111 Rehau (DE)
(72) Erfinder: Herrmann, Stefan, 95111 Rehau (DE); Mett, Thomas, 95182 Döhlau (DE)

(56) Entgegenhaltungen:
- DE-A1- 19 736 755
- DE-A1- 19 961 559
- FR-A1- 2 761 651
- FR-A1- 2 857 314

## Beschreibung

Die Erfindung bezieht sich auf einen Halter, welcher vorzugsweise zur Befestigung eines Fahrzeugverkleidungsteils an einer Fahrzeugkarosse vorgesehen ist, der wenigstens einen durch eine Aussparung im Fahrzeugverkleidungsteil durchsteckbaren Zapfen zur Befestigung des Fahrzeugverkleidungsteils am Halter aufweist, der in montiertem Zustand das Fahrzeugverkleidungsteil zumindest abschnittsweise hintergreift, und der wenigstens einen Befestigungsabschnitt zur Befestigung des Halters an der Fahrzeugkarosse aufweist.

Ein derartiger Halter ist beispielsweise aus der FR-A1-2857314 bekannt.

Bisher werden Verkleidungsteile von Fahrzeugen, vorzugsweise Kotflügel, entweder direkt, oder über einen separaten Halter mit standardisierten Befestigungselementen an der Fahrzeugkarosse befestigt. Bei den Haltern handelt es sich dabei vorwiegend um Blechteile. Werden Kunststoffteile an der Fahrzeugkarosse befestigt, so ist die Befestigung meistens gleitend ausgelegt, damit eine Längenänderung des Bauteils, hervorgerufen durch eine thermische Beanspruchung, ermöglicht wird.

Die Befestigung der Verkleidungsteile am Fahrzeug erfolgt dabei direkt in Einbaulage. Im Falle einer Online-Lackierung von Kunststoff-Verkleidungsteilen müssen diese so gelagert sein, dass ein spannungsfreies Ausdehnen bei der Lackierung, beispielsweise bei der kathodischen Tauchlackierung, gewährleistet ist.

Die Befestigung der Fahrzeugverkleidungsteile in Einbaulage bei Online-Lackierung birgt jedoch den Nachteil, dass hierbei die Fugen zwischen Fahrzeugerkleidungsteil und benachbartem Bauteil in etwa der Nenn-Fuge entsprechen, wodurch die Lackierung in die Tiefe der Fuge behindert wird. Eine separate Lackierung der Fahrzeugverkleidungsteile andererseits könnte zwar das Problem einer ungleichmäßigen oder sogar fehlenden Lackierung im Bereich der Fugen verhindern, wäre jedoch sehr unwirtschaftlich.

Aufgabe der Erfindung ist es daher, einen Halter der eingangs genannten Art zu verbessern, so dass dieser eine Online-Lackierung des Fahrzeugverkleidungsteils mit verbesserter Lackierung im Bereich der Fuge zwischen Fahrzeugverkleidungsteil und benachbartem Bauteil ermöglicht.

Diese Aufgabe wird erfindungsgemäß gelöst durch den Halter nach Anspruch 1.

Es hat sich gezeigt, dass durch eine solche Stützeinrichtung eine Anbringung von Fahrzeugverkleidungsteilen an der Fahrzeugkarosse realisierbar ist, so dass eine Online-Lackierung der Fahrzeugverkleidungsteile zusammen mit der Rohkarosse ermöglicht wird, ohne dass sich unlackierte oder mangelhaft lackierte Stellen im Fugenbereich ergeben. Durch die Stützeinrichtung wird das Fahrzeugverkleidungsteil in einer einbaunahen Lage an der Fahrzeugkarosse angebracht, so dass die Fugen zwischen Fahrzeugverkleidungsteil und benachbarten Bauteilen wesentlich größer sind als die sich ergebenden Fugen bei Anbringung der Fahrzeugverkleidungsteile in direkter Einbaulage. Somit wird die Lackierung der Fahrzeugverkleidungsteile und der Rohkarosse im Fugenbereich nicht behindert. Die Stützeinrichtung dient in beschriebener Weise als eine in den Halter integrierte Lackieraufnahme und macht die Verwendung zusätzlicher Lackiergestelle überflüssig.

Es hat sich weiterhin gezeigt, dass durch die Integration von mehreren Zapfen in den Halter bei der Befestigung des Fahrzeugverkleidungsteils am Halter der Montageaufwand deutlich verringert werden kann, da normalerweise bei der Befestigung von Fahrzeugverkleidungsteilen mit Hilfe von Haltern an jedem Befestigungspunkt ein separater Montagearbeitsgang notwendig ist. Durch Integration mehrerer Zapfen in den Halter fallen weiterhin auch die sonst üblichen vielen separaten Befestigungselemente weg, die an jedem Befestigungspunkt erforderlich sind.

Es hat sich zudem gezeigt, dass bei in den Halter integrierten Zapfen, die in montiertem Zustand das Fahrzeugverkleidungsteil zumindest abschnittsweise hintergreifen und dadurch das Fahrzeugverkleidungsteil am Halter befestigen, eine einfache Geometrie der Durchbrüche am Fahrzeugverkleidungsteil zum Durchstecken der Zapfen gewählt werden kann.

Ebenso hat sich gezeigt, dass lösbare Befestigungszapfen, die auf den Halter aufsteckbar sind, eine einfache und kostengünstige Reparaturmöglichkeit bei beschädigten Befestigungszapfen darstellen. Dadurch ergibt sich die Möglichkeit, nur die Zapfen zu ersetzen, die tatsächlich beschädigt wurden, wodurch ein kompletter Austausch des gesamten Halters überflüssig wird.

Von Vorteil kann es sein, dass der Halter aus polymerem Material besteht. Dadurch lässt sich der Halter äußerst kostengünstig fertigen bei gleichzeitig niedrigem Gewicht.

Es kann sich als günstig erweisen, wenn der zumindest eine Zapfen und die Stützeinrichtung an der dem Fahrzeugverkleidungsteil in montiertem Zustand zugewandten Seite des Halters angeordnet sind. Durch diese Anordnung ergibt sich eine leichte Handhabung und ein geringer Montageaufwand.

Weiterhin kann es sich als günstig erweisen, dass der zumindest eine Zapfen im Wesentlichen L-förmig ausgebildet ist. Hierdurch ergibt sich einerseits eine verlässliche Verbindung zwischen Halter und Fahrzeugverkleidungsteil, die sich andererseits auch wieder leicht lösen lässt.

Vorteilhaft kann es darüber hinaus sein, dass der zumindest eine Zapfen einstückig mit dem Halter verbunden ist, wobei der Halter und der Zapfen aus dem gleichen Material bestehen. Dadurch gelingt eine besonders einfache, stabile und kostengünstige Anbringung des Zapfens an den Halter.

Es kann sich als günstig erweisen, dass der zumindest eine Zapfen lösbar mit dem Halter verbunden ist. Damit ist im Falle der Beschädigung eines Zapfens ein problemloser und kostengünstiger Austausch möglich.

Von Vorteil kann es weiterhin sein, dass der zumindest eine Zapfen aus polymerem Material besteht. Dadurch erhält der Zapfen eine hohe Flexibilität bei gleichzeitig einfacher Verarbeitung und niedrigem Gewicht.

Ebenso kann es von Vorteil sein, dass der zumindest eine Zapfen aus einem metallischen Material besteht, wodurch der Zapfen eine hohe Stabilität und eine hohe Schadenstoleranz aufweist.
Zudem kann es sich als günstig erweisen, dass wenigstens zwei Zapfen vorgesehen sind, zwischen denen zumindest eine Stützeinrichtung anordnungsbar ist. Hiermit wird eine bessere Fixierung des Fahrzeugverkleidungsteils am Halter ermöglicht.

Es kann darüber hinaus vorteilhaft sein, dass wenigstens drei Zapfen vorgesehen sind, wobei der Abstand zwischen zwei benachbarten Zapfen im Wesentlichen gleich ist.

Dadurch ergibt sich eine sehr gleichmäßig verteilte mechanische Beanspruchung am Fahrzeugverkleidungsteil bzw. am Halter.

Vorzugsweise wird der zumindest eine Befestigungsabschnitt durch einen Durchbruch im Halter gebildet. Dies erlaubt eine sehr einfache und kostengünstige Ausführung des Befestigungsabschnitts.

Es kann sich als günstig erweisen, dass der durch einen Durchbruch gebildete zumindest eine Befestigungsabschnitt eine im Wesentlichen rechteckige Form aufweist. Durch diese konstruktive Gestaltung der Durchbrüche ist ein Ausgleich von Rohbautoleranzen an der Karosse bei der Befestigung möglich.

Es kann von Vorteil sein, dass der Halter zwei voneinander beabstandete Befestigungsabschnitte aufweist. Dadurch ist eine sehr stabile Befestigung des Halters an der Fahrzeugkarosse möglich.

Es kann weiterhin von Vorteil sein, wenn die Stützeinrichtung einstückig mit dem Halter verbunden ist, wobei Halter und Stützeinrichtung aus dem gleichen Material bestehen. Durch die einstückige Verbindung ergibt sich eine besonders einfache, stabile und kostengünstige Verbindung zwischen Stützeinrichtung und Halter.

Zudem kann es von Vorteil sein, wenn die Stützeinrichtung gegenüber der dem Fahrzeugverkleidungsteil in montiertem Zustand zugewandten Seite des Halters vorsteht. Dadurch gelingt eine sehr einfache und schnelle Anbringung des Fahrzeugverkleidungsteils am Halter.

Dabei kann es sich als günstig erweisen, wenn die Stützeinrichtung im Wesentlichen senkrecht zu der dem Fahrzeugverkleidungsteil in montiertem Zustand zugewandten Seite des Halters angeordnet ist. Hierdurch ergibt sich eine sichere, schnelle und einfache Anbringung des Fahrzeugverkleidungsteils am Halter.

Dabei kann es weiterhin vorteilhaft sein, wenn die Stützeinrichtung einen Abschnitt aufweist, der das auf der Stützeinrichtung im unmontierten Zustand angeordnete Fahrzeugverkleidungsteil in Richtung des Halters unterstützt. Damit wird ein Lösen des unmontierten Fahrzeugverkleidungsteils vom Halter behindert.

Es kann dabei darüber hinaus von Vorteil sein, wenn die Stützeinrichtung einen Abschnitt aufweist, der das auf der Stützeinrichtung im unmontierten Zustand angeordnete Fahrzeugverkleidungsteil sowohl in Richtung des Halters, als auch in dazu entgegengesetzter Richtung abstützt. Dadurch wird sowohl ein Lösen des Fahrzeugverkleidungsteils vom Halter, als auch ein Gleiten des Fahrzeugverkleidungsteils auf dem Halter behindert.

Weiterhin kann es sich als günstig erweisen, wenn die Stützeinrichtung aus einem polymeren Material besteht. Dadurch lässt sich die Stützeinrichtung mit niedrigem Gewicht ausführen bei gleichzeitig günstigem mechanischen Verhalten und leichter Verarbeitbarkeit.

Vorzugsweise ist das Fahrzeugverkleidungsteil auf der Stützeinrichtung im unmontierten Zustand gestützt anordnungsbar. Hiermit ergibt sich eine sehr einfache, schnelle und sichere Montage des Fahrzeugverkleidungsteils auf der Stützeinrichtung.

Daneben kann es von Vorteil sein, wenn das Fahrzeugverkleidungsteil an der Stützeinrichtung im unmontierten Zustand hängend anordnungsbar ist. Auch dadurch ergibt sich eine einfache, schnelle und sichere Montage des Fahrzeugverkleidungsteils auf der Stützeinrichtung.

Die Erfindung bezieht sich ebenso auf ein Fahrzeugverkleidungsteil, das mit einem Halter nach einem der vorangegangenen Ansprüche an einem Fahrzeug angeordnet ist.

Darüber hinaus bezieht sich die Erfindung auf ein Fahrzeug mit einem Halter nach einem der vorangegangenen Ansprüche.
Nachfolgend wird die Wirkungs- und Funktionsweise der Erfindung näher erläutert:

### Es zeigen:

- Fig. 1: eine erste Ausführungsform des erfindungsgemäßen Halters;
- Fig. 2: ein Fahrzeugverkleidungsteil zur Anbringung an die Ausführungsform des erfindungsgemäßen Halter in Fig. 1;
- Fig. 3a: Seitenansicht des erfindungsgemäßen Halters mit Fahrzeugverkleidungsteil in unmontiertem Zustand, das gestützt auf dem Halter angeordnet ist;
- Fig. 3b: Seitenansicht des erfindungsgemäßen Halters mit Fahrzeugverkleidungsteil in montiertem Zustand
- Fig. 4a: eine zweite Ausführungsform des erfindungsgemäßen Halters in einer Seitenansicht;
- Fig. 4b: Darstellung des Schnittes entlang der Linie B-B aus Fig. 3a zur Verdeutlichung eines Reparaturvorschlags bei beschädigtem Zapfen gemäß der zweiten Ausführungsform

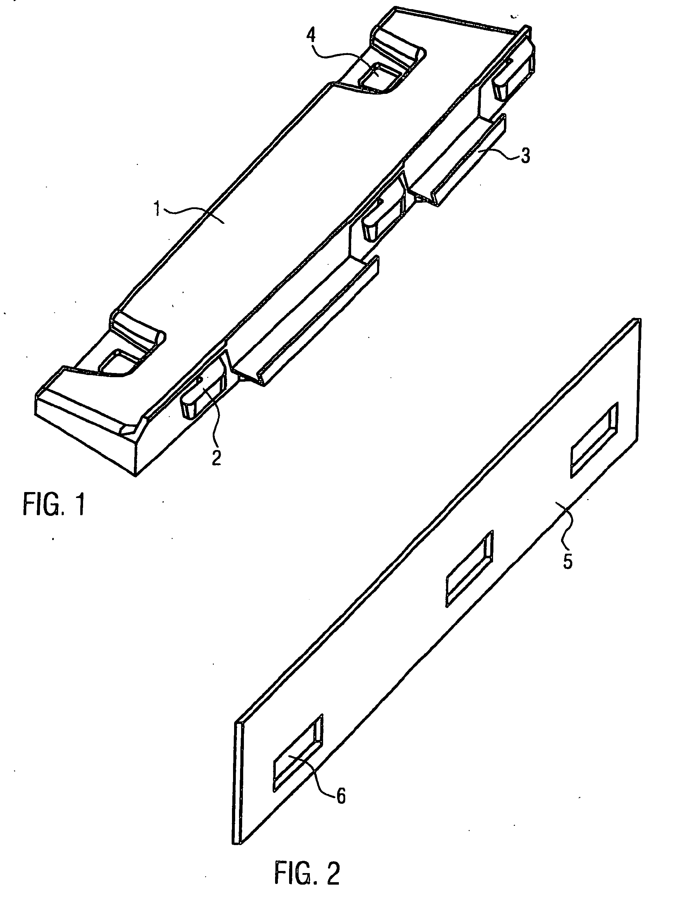

Die Figuren 1 und 2 zeigen den Halter 1 und das Fahrzeugverkleidungsteil 5 in einer perspektivischen Ansicht.

Der Halter 1 besteht aus polymerem Material. In der dargestellten Ausführungsform ist der Halter im Wesentlichen rechteckig, jedoch sind auch andere geometrische Formen denkbar.

Der Halter verfügt über drei L-förmige, mit dem Halter einstückig verbundene Zapfen 2, wobei jeweils zwei benachbarte Zapfen einen im Wesentlichen gleichen Abstand zueinander aufweisen. L-förmige Zapfen eignen sich besonders gut zur hintergreifenden Verbindung des Fahrzeugverkleidungsteils am Halter, andersartig geformte Zapfen sind natürlich auch denkbar. Selbstverständlich kann der Halter auch mehr oder weniger als drei Zapfen aufweisen. Darüber hinaus sind Anordnungen der Zapfen denkbar, wobei die Abstände zwischen jeweils zwei benachbarten Zapfen variieren können. Die Zapfen sind ebenfalls aus polymerem Material und einstückig mit dem Halter verbunden.

Zwischen zwei benachbarten Zapfen ist jeweils eine Stützeinrichtung 3 angeordnet. Es ist aber auch möglich, mehr als eine Stützeinrichtung zwischen zwei benachbarten Zapfen anzuordnen. Ebenso ist es denkbar, dass nicht zwischen jedem Paar benachbarter Zapfen eine Stützeinrichtung angeordnet ist. Wie die Zapfen ist auch die Stützeinrichtung aus polymerem Material und einstückig mit dem Halter verbunden.

In der dargestellten Ausführungsform weist die einstückig mit dem Halter verbundene Stützeinrichtung einen L-förmigen Querschnitt auf, wobei der längere Schenkel der Querschnittsform im Wesentlichen senkrecht auf der Seitenfläche des Halters steht, die der Fahrzeugerkleidung im montierten Zustand zugewandt ist. Der kürzere Schenkel der Querschnittsform ist im Wesentlichen senkrecht zum längeren Schenkel angeordnet. Die L-förmige Querschnittsform der Stützeinrichtung erweist sich als besonders zweckmäßig zur Anordnung des Fahrzeugverkleidungsteils am Halter für die Online-Lackierung, jedoch sind selbstverständlich andere Formen möglich. Die longitudinale Ausdehnung der Stützeinrichtung entspricht im Wesentlichen dem Abstand zweier benachbarter Zapfen, jedoch sind kürzere longitudinale Ausdehnungen denkbar.

Der Halter verfügt über zwei durch Durchbrüche im Halter gebildete Befestigungsabschnitte 4. Die Durchbrüche haben dabei eine im Wesentlichen rechteckige Form. Ebenso kann der Halter mehr oder weniger Befestigungsabschnitte aufweisen. Auch muss der Befestigungsabschnitt nicht durch einen Durchbruch gebildet sein. Obwohl eine im Wesentlichen rechteckige Form des Durchbruchs besonders vorteilhaft zum Ausgleich von Rohbautoleranzen ist, sind darüber hinaus sind andere geometrische Formen des Durchbruchs möglich.

Nachfolgend wird die Wirkungs- und Funktionsweise der Erfindung näher erläutert.

Der Halter 1 wird einerseits als Lackieraufnahme für Verkleidungsteile von Fahrzeugen während der Online Lackierung eingesetzt. Normalerweise geschieht die Online-Lackierung von Fahrzeugverkleidungsteilen in Einbaulage, wobei die Fahrzeugverkleidungsteile über einen Halter an der Fahrzeugkarosse befestigt sind. Durch die Einbaulage der Fahrzeugverkleidungsteile resultiert zwischen diesen und benachbarten Bauteilen ein relativ geringes Fugenmaß, das in etwa der Nenn-Fugenbreite entspricht. Während der Online-Lackierung kann es aufgrund des geringen Fugenmaßes zu Schwierigkeiten bei der Lackierung im Fugenbereich kommen, so dass eine Lackierung in die Tiefe der Fuge behindert bzw. erschwert wird. Durch Anbringen des Fahrzeugverkleidungsteils 5 an der als Lackieraufnahme dienende Stützeinrichtung 3 des Halters 1 resultiert keine Einbaulage, sondern nur eine einbaunahe Positionierung des Fahrzeugverkleidungsteils. Somit ergeben sich wesentlich größere Spaltmaße zwischen Fahrzeugverkleidungsteil und Rohkarosse, wodurch sich keine Behinderung der Lackierung im Bereich der Spalte bzw. Fugen ergibt. Die Anbringung des Fahrzeugverkleidungsteils am Halter kann entweder so erfolgen, dass sich das unmontierte Fahrzeugverkleidungsteil auf der Stützeinrichtung abstützt, oder in der Weise, dass das Fahrzeugverkleidungsteil an die Stützeinrichtung angehängt wird.

Durch diese Art der Anbringung kommt es nicht zu einem Hintergreifen des Fahrzeugverkleidungsteils durch die Zapfen, womit auch eine Lackierung des Fahrzeugverkleidungsteils in den Aussparungen 6 erfolgen kann, die bei herkömmlicher Anbringung des Fahrzeugverkleidungsteils in Einbaulage für die Lackierung nicht erreichbar wären. Sowohl bei gestützter als auch hängender Anordnung des Fahrzeugverkleidungsteils am Halter resultiert eine schnelle, einfache und kostengünstige Anbringung für die nachfolgende Online-Lackierung.

Andererseits übernimmt der Halter 1 die Funktion eines Befestigungselementes zur Befestigung des Fahrzeugverkleidungsteils 5 an der Fahrzeugkarosse. Zur Befestigung werden die Zapfen 2 des Halters 1 durch entsprechende Aussparungen 6 des Fahrzeugverkleidungsteils 5 durchgesteckt. Anschließend erfolgt ein Verschieben des Fahrzeugverkleidungsteils entgegengesetzt zur Ausrichtung der Zapfen, so dass es zum zumindest abschnittsweisen Hintergreifen des Fahrzeugverkleidungsteils durch die Zapfen kommt, wodurch das Fahrzeugverkleidungsteil am Halter gehalten wird und in zwei Richtungen fixiert ist, während es in Fügerichtung gleiten kann.

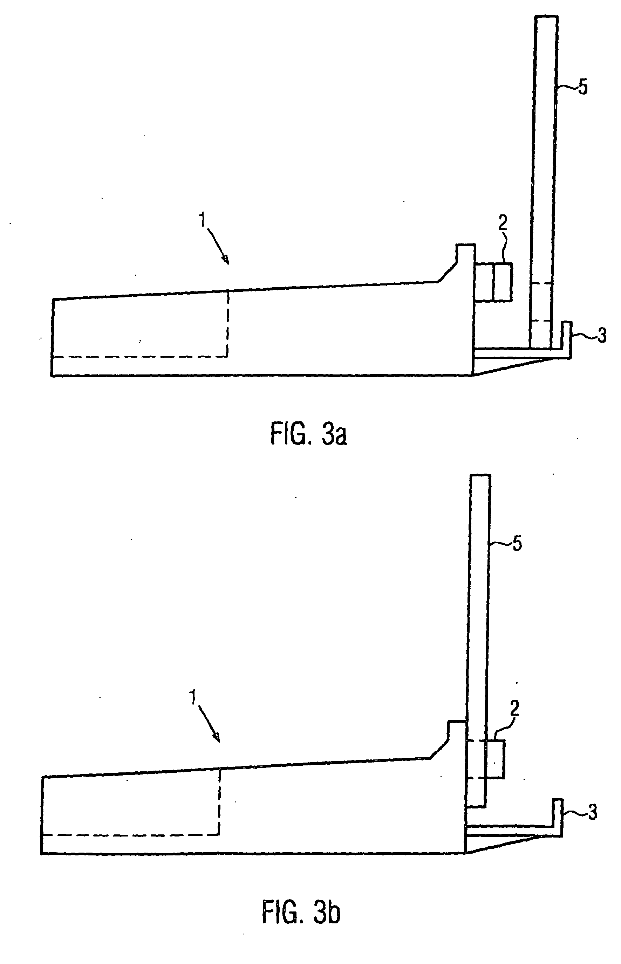

Die Figuren 3a und 3b zeigen Seitenansichten des erfindungsgemäßen Halters, wobei in Fig. 3a das unmontierte und auf dem Halter gestützt angeordnete Fahrzeugverkleidungsteil dargestellt ist, während in Fig. 3b das Fahrzeugverkleidungsteil in montiertem Zustand dargestellt ist.
Zur Lackierung des Fahrzeugverkleidungsteils innerhalb eines Online-Lackierprozesses ist das Fahrzeugverkleidungsteil derart am Halter angeordnet, dass es sich auf der Stützeinrichtung abstützt, ohne mit dem Zapfen in Kontakt zu stehen (Fig. 3a). Die L-förmige Querschnittsform der Stützeinrichtung verhindert dabei ein Lösen des Fahrzeugverkleidungsteils vom Halter.

Das lackierte Fahrzeugverkleidungsteil wird mit dem Halter verbunden, indem die Zapfen des Halters durch die Aussparungen 6 im Fahrzeugverkleidungsteil hindurch gesteckt werden, und anschließend das Fahrzeugverkleidungsteil entgegengesetzt der Ausrichtung der L-förmigen Zapfen verschoben wird (Fig. 3b). Dadurch kommt es zumindest zum abschnittsweisen Hintergreifen des Fahrzeugverkleidungsteils durch die Zapfen, wodurch das Fahrzeugverkleidungsteil am Halter derart fixiert ist, dass es lediglich in Fügerichtung verschiebbar ist.

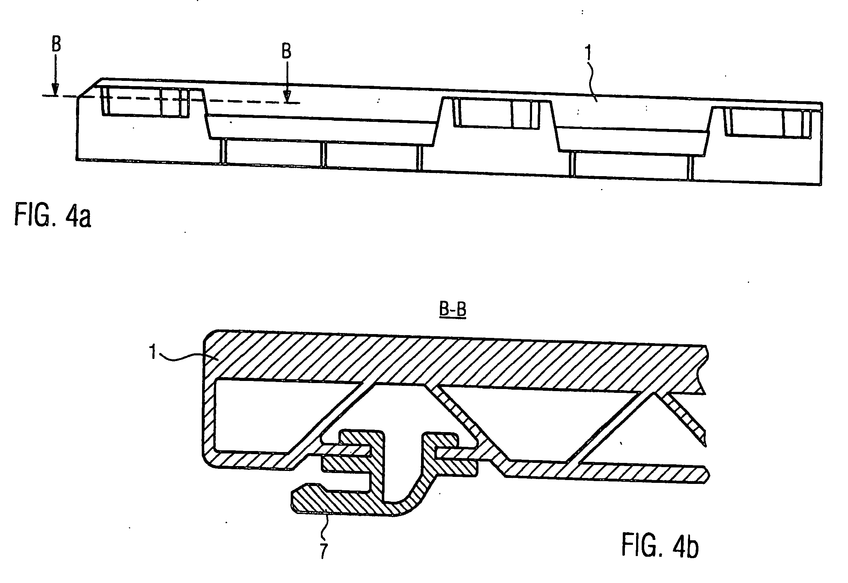

In den Figuren 4a und 4b ist eine zweite Ausführungsform der Erfindung dargestellt. Um Wiederholungen zu vermeiden, wird lediglich auf die Unterschiede zur ersten Ausführungsform eingegangen.

Im Gegensatz zur ersten Ausführungsform sind die Zapfen 2 nicht einstückig mit dem Halter 1 verbunden, sondern lösbar an diesem angebracht (siehe Fig. 4b). Dabei ist der Zapfen gleitend mit dem Halter in Eingriff.

Die Wirkungsweise der zweiten Ausführungsform entspricht im Wesentlichen der ersten, abgesehen von der Austauschbarkeit und damit der Reparaturmöglichkeit der Zapfen des Halters. Kommt es zur Beschädigung eines Zapfens des Halters, so ist es möglich, diesen gegen einen neuen auszutauschen, indem der Austauschzapfen an Stelle des beschädigten Zapfens von oben auf den Halter aufgesteckt wird, wobei der entsprechende Bereich im Halter auszusparen ist.

## Patentansprüche

1. Halter (1) zur Befestigung eines Fahrzeugverkleidungsteils an einer Fahrzeugkarosse, der wenigstens einen durch eine Aussparung (6) in dem Fahrzeugverkleidungsteil (5) durchsteckbaren Zapfen (2) zur Befestigung des Fahrzeugverkleidungsteils (5) am Halter (1) aufweist, der in montiertem Zustand das Fahrzeugverkleidungsteil (5) zumindest abschnittsweise hintergreift, und der wenigstens einen Befestigungsabschnitt (4) zur Befestigung des Halters (1) an der Fahrzeugkarosse aufweist, **dadurch gekennzeichnet, dass** der Halter (1) weiterhin eine als Lackieraufnahme dienende Stützeinrichtung (3) aufweist, mit der das Fahrzeugverkleidungsteil (5) zur Lackierung im unmontierten Zustand, in welchem der Zapfen (2) das Fahrzeugverkleidungsteil (5) nicht hintergreift, an der Fahrzeugkarosse anordnungsbar ist.

2. Halter nach Anspruch 1, **dadurch gekennzeichnet, dass** dieser aus einem polymeren Material besteht.

3. Halter nach Anspruch 1 oder 2, **dadurch gekennzeichnet, dass** der zumindest eine Zapfen (2) und die Stützeinrichtung (3) an der dem Fahrzeugverkleidungsteil (5) in montiertem Zustand zugewandten Seite des Halters (1) angeordnet sind.

4. Halter nach zumindest einem der vorangegangenen Ansprüche, **dadurch gekennzeichnet, dass** der zumindest eine Zapfen (2) im Wesentlichen L-förmig ausgebildet ist.

5. Halter nach zumindest einem der vorangegangenen Ansprüche, **dadurch gekennzeichnet, dass** der zumindest eine Zapfen (2) einstückig mit dem Halter (1) verbunden ist, wobei der Halter (1) und der Zapfen (2) aus dem gleichen Material bestehen.

6. Halter nach zumindest einem der vorangegangenen Ansprüche, **dadurch gekennzeichnet, dass** der zumindest eine Zapfen (2) lösbar mit dem Halter verbunden ist.

7. Halter nach zumindest einem der vorangegangenen Ansprüche, **dadurch gekennzeichnet, dass** der zumindest eine Zapfen (2) aus einem polymeren Material besteht.

8. Halter nach zumindest einem der vorangegangenen Ansprüche, **dadurch gekennzeichnet, dass** der zumindest eine Zapfen (2) aus einem metallischen Material besteht.

9. Halter nach zumindest einem der vorangegangenen Ansprüche, **dadurch gekennzeichnet, dass** wenigstens zwei Zapfen (2) vorgesehen sind, zwischen denen zumindest eine Stützeinrichtung (3) anordnungsbar ist.

10. Halter nach zumindest einem der vorangegangenen Ansprüche, **dadurch gekennzeichnet, dass** wenigstens drei Zapfen (2) vorgesehen sind, wobei der Abstand zwischen zwei benachbarten Zapfen (2) im Wesentlichen gleich ist.

11. Halter nach zumindest einem der vorangegangenen Ansprüche, **dadurch gekennzeichnet, dass** der zumindest eine Befestigungsabschnitt (4) durch einen Durchbruch im Halter (1) gebildet wird.

12. Halter nach zumindest einem der vorangegangenen Ansprüche, **dadurch gekennzeichnet, dass** der durch einen Durchbruch gebildete zumindest eine Befestigungsabschnitt (4) eine im Wesentlichen rechteckige Form aufweist.

13. Halter nach zumindest einem der vorangegangenen Ansprüche, **dadurch gekennzeichnet, dass** dieser zwei voneinander beabstandete Befestigungsabschnitte (4) aufweist.

14. Halter nach zumindest einem der vorangegangenen Ansprüche, **dadurch gekennzeichnet, dass** die Stützeinrichtung (3) einstückig mit dem Halter (1) verbunden ist, wobei Halter (1) und Stützeinrichtung (3) aus dem gleichen Material bestehen.

15. Halter nach zumindest einem der vorangegangenen Ansprüche, **dadurch gekennzeichnet, dass** die Stützeinrichtung (3) gegenüber der dem Fahrzeugverkleidungsteil (5) in montiertem Zustand zugewandten Seite des Halters (1) vorsteht.

16. Halter nach zumindest einem der vorangegangenen Ansprüche, **dadurch gekennzeichnet, dass** die Stützeinrichtung (3) im Wesentlichen senkrecht zu der dem Fahrzeugverkleidungsteil (5) in montiertem Zustand zugewandten Seite des Halters (1) angeordnet ist.

17. Halter nach zumindest einem der vorangegangenen Ansprüche, **dadurch gekennzeichnet, dass** die Stützeinrichtung (3) einen Abschnitt aufweist, der das auf der Stützeinrichtung im unmontierten Zustand angeordnete Fahrzeugverkleidungsteil (5) in Richtung des Halters (1) unterstützt.

18. Halter nach zumindest einem der vorangegangenen Ansprüche, **dadurch gekennzeichnet, dass** die Stützeinrichtung (3) einen Abschnitt aufweist, der das auf der Stützeinrichtung im unmontierten Zustand angeordnete Fahrzeugverkleidungsteil (5) sowohl in Richtung des Halters (1), als auch in dazu entgegengesetzter Richtung unterstützt.

19. Halter nach zumindest einem der vorangegangenen Ansprüche, **dadurch gekennzeichnet, dass** die Stützeinrichtung (3) aus einem polymeren Material besteht.

20. Halter nach zumindest einem der vorangegangenen Ansprüche, **dadurch gekennzeichnet, dass** das Fahrzeugverkleidungsteil (5) auf der Stützeinrichtung (3) im unmontierten Zustand gestützt anordnungsbar ist.

21. Halter nach zumindest einem der vorangegangenen Ansprüche, **dadurch gekennzeichnet, dass** das Fahrzeugverkleidungsteil (5) an der Stützeinrichtung (3) im unmontierten Zustand hängend anordnungsbar ist.

22. Fahrzeugverkleidung, die mit einem Halter (1) nach einem der vorangegangenen Ansprüche an einem Fahrzeug angeordnet ist.

23. Fahrzeug mit einem Halter (1) nach einem der vorangegangenen Ansprüche.

## Claims

1. Fastener (1) for attaching a vehicle trim part to a vehicle body, which has at least one stud (2) which can be plugged through a recess (6) in the vehicle trim part (5) and has the purpose of attaching the vehicle trim part (5) to the fastener (1) which, in the mounted state, engages, at least in certain sections, behind the vehicle trim part (5) and which has at least one attachment section (4) for attaching the fastener (1) to the vehicle body, **characterized in that** the fastener (1) also has a supporting device (3) which serves as a painting mount, with which the vehicle trim part (5) can be arranged on the vehicle body for painting in the unmounted state in which the stud (2) does not engage behind the vehicle trim part (5).

2. Fastener according to Claim 1, **characterized in that** it is composed of a polymer material.

3. Fastener according to Claim 1 or 2, **characterized in that** the at least one stud (2) and the supporting device (3) are arranged on the side of the fastener (1) which faces the vehicle trim part (5) in the mounted state.

4. Fastener according to at least one of the preceding claims, **characterized in that** the at least one stud (2) is of essentially L-shaped design.

5. Fastener according to at least one of the preceding claims, **characterized in that** the at least one stud (2) is connected in one piece to the fastener (1), wherein the fastener (1) and the stud (2) are composed of the same material.

6. Fastener according to at least one of the preceding claims, **characterized in that** the at least one stud (2) is detachably connected to the fastener.

7. Fastener according to at least one of the preceding claims, **characterized in that** the at least one stud (2) is composed of a polymer material.

8. Fastener according to at least one of the preceding claims, **characterized in that** the at least one stud (2) is composed of a metallic material.

9. Fastener according to at least one of the preceding claims, **characterized in that** at least two studs (2), between which at least one supporting device (3) can be arranged, are provided.

10. Fastener according to at least one of the preceding claims, **characterized in that** at least three studs (2) are provided, wherein the distance between two adjacent studs (2) is essentially the same.

11. Fastener according to at least one of the preceding claims, **characterized in that** the at least one attachment section (4) is formed by a breakthrough in the fastener (1).

12. Fastener according to at least one of the preceding claims, **characterized in that** the at least one attachment section (4) which is formed by a breakthrough has an essentially rectangular shape.

13. Fastener according to at least one of the preceding claims, **characterized in that** said fastener has two attachment sections (4) which are spaced apart from one another.

14. Fastener according to at least one of the preceding claims, **characterized in that** the supporting device (3) is connected integrally to the fastener (1), wherein the fastener (1) and supporting device (3) are composed of the same material.

15. Fastener according to at least one of the preceding claims, **characterized in that** the supporting device (3) protrudes with respect to the side of the fastener (1) which faces the vehicle trim part (5) in the mounted state.

16. Fastener according to at least one of the preceding claims, **characterized in that** the supporting device (3) is arranged essentially perpendicularly with respect to the side of the fastener (1) which faces the vehicle trim part (5) in the mounted state.

17. Fastener according to at least one of the preceding claims, **characterized in that** the supporting device (3) has a section which supports the vehicle trim part (5) in the direction of the fastener (1) when said vehicle trim part (5) is arranged on the supporting device in the unmounted state.

18. Fastener according to at least one of the preceding claims, **characterized in that** the supporting device (3) has a section which supports the vehicle trim part (5) both in the direction of the fastener (1) and in the opposite direction when said vehicle trim part (5) is arranged on the supporting device in the unmounted state.

19. Fastener according to at least one of the preceding claims, **characterized in that** the supporting device (3) is composed of a polymer material.

20. Fastener according to at least one of the preceding claims, **characterized in that** the vehicle trim part (5) can be arranged supported on the supporting device (3) in the unmounted state.

21. Fastener according to at least one of the preceding claims, **characterized in that** the vehicle trim part (5) can be arranged suspended from the supporting device (3) in the unmounted state.

22. Vehicle trim which is arranged on a vehicle with a fastener (1) according to one of the preceding claims.

23. Vehicle having a fastener (1) according to one of the preceding claims.

## Revendications

1. Support (1) pour la fixation d'une pièce d'habillage de véhicule à une carrosserie de véhicule, qui comporte au moins un ergot (2) pouvant passer à travers un évidement (6) dans la pièce d'habillage de véhicule (5) pour la fixation de la pièce d'habillage de véhicule (5) au support (1), qui à l'état monté accroche par l'arrière au moins localement la pièce d'habillage de véhicule (5), et qui présente au moins une partie de fixation (4) pour la fixation du support (1) à la carrosserie de véhicule, **caractérisé en ce que** le support (1) comporte en outre un dispositif d'appui (3) servant de logement de laquage, avec lequel la pièce d'habillage de véhicule (5) peut être disposée sur la carrosserie de véhicule pour le laquage à l'état non monté, dans lequel l'ergot (2) n'accroche pas la pièce d'habillage de véhicule (5) par l'arrière.

2. Support selon la revendication 1, **caractérisé en ce que** celui-ci est constitué d'une matière polymère.

3. Support selon la revendication 1 ou 2, **caractérisé en ce que** l'au moins un ergot (2) et le dispositif d'appui (3) sont disposés sur le côté du support (1) tourné vers la pièce d'habillage de véhicule (5) à l'état monté.

4. Support selon au moins une des revendications précédentes, **caractérisé en ce que** l'au moins un ergot (2) est réalisé essentiellement en forme de L.

5. Support selon au moins une des revendications précédentes, **caractérisé en ce que** l'au moins un ergot (2) est relié d'un seul tenant au support (1), dans lequel le support (1) et l'ergot (2) sont constitués de la même matière.

6. Support selon au moins une des revendications précédentes, **caractérisé en ce que** l'au moins un ergot (2) est relié au support de manière séparable.

7. Support selon au moins une des revendications précédentes, **caractérisé en ce que** l'au moins un ergot (2) est constitué d'une matière polymère.

8. Support selon au moins une des revendications précédentes, **caractérisé en ce que** l'au moins un ergot (2) est constitué d'une matière métallique.

9. Support selon au moins une des revendications précédentes, **caractérisé en ce qu'**il est prévu au moins deux ergots (2), entre lesquels on peut disposer au moins un dispositif d'appui (3).

10. Support selon au moins une des revendications précédentes, **caractérisé en ce qu'**il est prévu au moins trois ergots (2), dans lequel la distance entre deux ergots voisins (2) est essentiellement la même.

11. Support selon au moins une des revendications précédentes, **caractérisé en ce que** l'au moins une partie de fixation (4) est formée par une ouverture dans le support (1).

12. Support selon au moins une des revendications précédentes, **caractérisé en ce que** l'au moins une partie de fixation (4) formée par une ouverture présente une forme essentiellement rectangulaire.

13. Support selon au moins une des revendications précédentes, **caractérisé en ce qu'**il présente deux parties de fixation (4) espacées l'une de l'autre.

14. Support selon au moins une des revendications précédentes, **caractérisé en ce que** le dispositif d'appui (3) est relié d'un seul tenant au support (1), dans lequel le support (1) et le dispositif d'appui (3) sont constitués de la même matière.

15. Support selon au moins une des revendications précédentes, **caractérisé en ce que** le dispositif d'appui (3) est en saillie par rapport au côté du support (1) tourné vers la pièce d'habillage de véhicule (5) à l'état monté.

16. Support selon au moins une des revendications précédentes, **caractérisé en ce que** le dispositif d'appui (3) est disposé essentiellement perpendiculairement au côté du support (1) tourné vers la pièce d'habillage de véhicule (5) à l'état monté.

17. Support selon au moins une des revendications précédentes, **caractérisé en ce que** le dispositif d'appui (3) présente une partie, qui soutient en direction du support (1) la pièce d'habillage de véhicule (5) disposée à l'état non monté sur le dispositif d'appui.

18. Support selon au moins une des revendications précédentes, **caractérisé en ce que** le dispositif d'appui (3) présente une partie, qui soutient la pièce d'habillage de véhicule (5) disposée à l'état non monté sur le dispositif de soutien, aussi bien en direction du support (1) que dans la direction opposée.

19. Support selon au moins une des revendications précédentes, **caractérisé en ce que** le dispositif d'appui (3) est constitué d'une matière polymère.

20. Support selon au moins une des revendications précédentes, **caractérisé en ce que** la pièce d'habillage de véhicule (5) peut être appuyée sur le dispositif d'appui (3) à l'état non monté.

21. Support selon au moins une des revendications précédentes, **caractérisé en ce que** la pièce d'habillage de véhicule (5) peut être suspendue au dispositif d'appui (3) à l'état non monté.

22. Habillage de véhicule, qui est disposé sur un véhicule avec un support selon l'une quelconque des revendications précédentes.

23. Véhicule avec un support (1) selon l'une quelconque des revendications précédentes.
